# EUROPEAN PATENT SPECIFICATION

(11) **EP 1 608 137 B1**
(45) Date of publication and mention of the grant of the patent: **21.01.2009**
(21) Application number: 05013274.5
(22) Date of filing: 20.06.2005
(51) Int. Cl.: H04M 1/725

(54) **Mobile communication terminal and method for processing a received text message while outputting digital broadcasting data**
Mobilkommunikationsendgerät, Verfahren für die Verarbeitung einer empfangenen Textanzeige beim Ausgeben von digitalen Rundfunkdaten
Terminal de communication mobile, procédé pour traiter un message texte reçu tout en produisant des données de diffusion numériques

(30) Priority: 19.06.2004 KR 2004045885
(43) Date of publication of application: 21.12.2005
(73) Proprietor: SAMSUNG ELECTRONICS CO., LTD., Suwon-si, Gyeonggi-do (KR)
(72) Inventor: Yoo, Hoon, Yeongtong-gu Suwon-si Gyeonggi-do (KR)
(74) Representative: Grünecker, Kinkeldey, Stockmair & Schwanhäusser Anwaltssozietät

(56) References cited:
- DE-A1- 10 147 665
- GB-A- 2 395 082
- US-A- 6 141 058
- US-B1- 6 459 906

## Description

The present invention relates to a terminal and method for receiving digital broadcasting that provides digital broadcasting program information, and more particularly, to a mobile communication terminal and method for receiving digital broadcasting for processing a text message, like a short message service (SMS) message, for example, while outputting digital broadcasting data.

Generally, "digital broadcasting" refers to a high level broadcasting service that provides users with high quality image and sound in place of the conventional analog broadcasting. Interest in digital broadcasting services has increased recently with advances in digital broadcasting technology and mobile communication technology. More specifically, digital multimedia broadcasting (DMB) services using mobile communication terminals is gaining popularity. The DMB service is a broadcasting service through which users can view and listen to various digital broadcasting programs with multiple channels by means of a personal portable receiver or a vehicle receiver with a nondirectional antenna while being mobile.

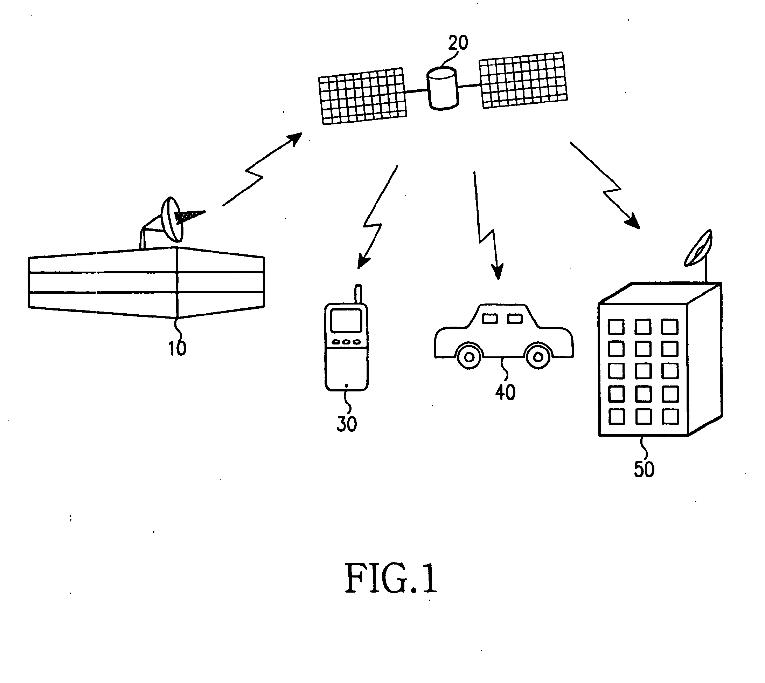

FIG. 1 illustrates a system for implementing a DMB service. Referring to FIG. 1, the system includes a data transmission center 10, a satellite 20, and receivers, for example, a mobile communication terminal 30, a receiver 40 for vehicle use, and a receiver 50 for home use. The data transmission center 10 compresses and modulates digital multimedia broadcasting data (e.g., image, voice, and data signals, etc.), and then transmits the compressed and modulated digital broadcasting data to the satellite 20. The satellite 20 receives and amplifies a signal from the data transmission center 10, and frequency-converts the signal to transmit the converted signal to the ground. The receivers 30, 40 and 50 receive the signal from the satellite 20, and demodulate and decompress the signal to recover and reproduce an original signal.

More specifically, the mobile communication terminal 30 operates in any one of two modes, that is, a communication mode for providing a conventional mobile communication service and a broadcasting mode for providing a digital broadcasting service. Because the conventional mobile terminal 30 cannot efficiently communicate and broadcast at the same time, the two operations cannot be performed simultaneously. If a short message service (SMS) message is received while the mobile communication terminal 30 is broadcasting, the user cannot be notified of the SMS message reception in real time. Communication via SMS messaging is conventionally impossible while the user is watching a DMB through the mobile communication terminal 30, causing an inconvenience to the user and SMS sender.

GB 2 395 082 A refers to a mobile terminal with a TV reception and display function, and in particular to a mobile terminal comprising a tuner to enable a user to select a particular broadcast television channel. A decoder decodes the TV signal and separates it into a video signal, audio signal and synchronising signals. A video processing unit converts the video signal into digital video data and acts to process the received video data on a frame by frame basis wherein a presently received frame is stored to memory whilst a previously stored frame is output to display. The display unit comprises an area for video image display and a further area designated for display of user data. The video processor of the terminal may also include a format scaler which scales the size of the video images such that they may be appropriately displayed upon the terminal display screen.

US 6,459,906 B1 refers to a method and system for displaying received messages of portable television phones, wherein the TV phone includes a TV unit that reproduces and outputs a video signal from a selected channel. A display unit interfaces with the TV unit and displays the inputted video signal from the selected channel while in a TV mode. An MRFU receives data of a forward channel transmitted from a base station. An MSP provides a channel selection signal to the TV unit and transmits and receives voice and character signals by controlling the MRFU and generates a display control signal responsive to an incoming character message. An OSD generates a video signal corresponding to the display control signal received at an input of the OSD and provides the generated video signal to the display unit. The method of controlling the operation mode of the TV phone comprises the steps of receiving a character message transmitted from the base station through the forward channel when the video signal generated by the TV unit is displayed on a screen in said display unit during the TV mode. In addition, a video signal of the OSD corresponding to the first line in the received character message is displayed on a portion of the screen of the display unit, while the other portions of the screen display the respective portion of the video signal generated by the TV unit.

Accordingly, the present invention has been designed to solve the above and other problems occurring in the prior art. Therefore, it is the object of the present invention to provide efficient and user convenient interworking between a device for performing communication mode and a device for performing broadcasting mode in a mobile communication terminal for receiving digital broadcasting.

This object is solved by the subject matter of the independent claims.

Preferred embodiments are defined in the dependent claims.

It is an aspect of the present invention to process a received short message service (SMS) message while a mobile communication terminal for receiving digital broadcasting operates in broadcasting mode.

It is another aspect of the present invention to allow a user of a mobile communication terminal for receiving digital broadcasting to conveniently use a digital broadcasting service.

The above and other aspects can be achieved by a mobile communication terminal for receiving digital broadcasting when the terminal operates in phone or broadcasting mode. The mobile communication terminal includes a phone module for receiving a text message transferred to the mobile communication terminal, converting the received text message into a predetermined format of data packet, and outputting the predetermined format of data packet, when the mobile communication terminal operates in the broadcasting mode; and a broadcasting module for receiving the predetermined format of data packet from the phone module, and outputting the text message on a partial area of a screen outputting digital broadcasting data while a digital broadcasting service is being provided.

The above and other aspects can be achieved by a method for processing a text message in a mobile communication terminal including a phone module and a broadcasting module. The method includes receiving the text message transferred to the mobile communication terminal in the phone module, when the mobile communication terminal operates in broadcasting mode; converting the received text message into a predetermined format of data packet in the phone module; transferring the converted text message to the broadcasting module; and outputting the transferred converted text message on a screen on which digital broadcasting data is being output in the broadcasting module.

The above and other aspects and advantages of the present invention will be more clearly understood from the following detailed description taken in conjunction with the accompanying drawings, in which:
FIG. 1 illustrates an example of a system for implementing a digital multimedia broadcasting (DMB) service;
FIG. 2 is a schematic block diagram illustrating a mobile communication terminal for receiving digital broadcasting in accordance with an embodiment of the present invention;
FIG. 3 is a block diagram illustrating an example of an interworking structure between internal modules in the mobile communication terminal in accordance with an embodiment of the present invention;
FIG. 4 is a ladder diagram illustrating a method for processing a text message in accordance with an embodiment of the present invention;
FIG. 5 is a flow chart illustrating a process for outputting a text message in accordance with an embodiment of the present invention;
FIG. 6 illustrates a data format of a text message that is transmitted between internal modules in the mobile communication terminal in accordance with an embodiment of the present invention;
FIGS. 7A to 7D illustrate examples of a flag field of the text message in accordance with an embodiment of the present invention;
FIGS. 8A and 8B illustrate examples of a display screen for notifying a user that a text message has been received while outputting digital broadcasting data in accordance with an embodiment of the present invention; and
FIGS. 9A and 9B illustrate examples of a display screen for displaying the received text message while outputting digital broadcasting data in accordance with an embodiment of the present invention.

Preferred embodiments of the present invention will be described in detail herein below with reference to the accompanying drawings. In the following description, a detailed description of known functions and configurations incorporated herein will be omitted for conciseness.

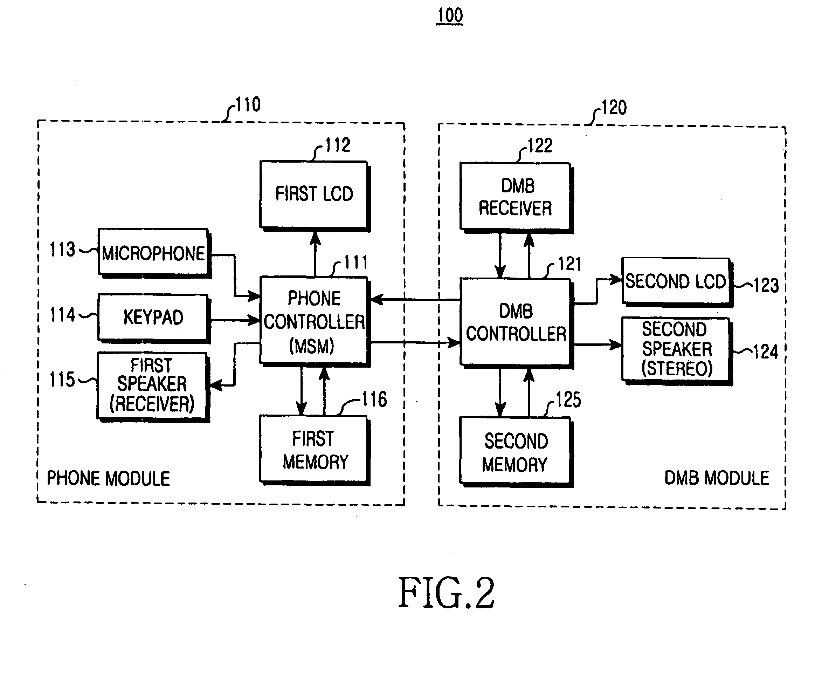

FIG. 2 is a schematic block diagram illustrating a mobile communication terminal for receiving digital broadcasting in accordance with an embodiment of the present invention. Referring to FIG. 2, the mobile communication terminal 100 includes a portable phone function module (or a phone module) 110 for controlling a portable phone function, and a broadcasting function module (or a digital multimedia broadcasting (DMB) module) 120 for controlling a broadcasting reception function.

The phone module 110 includes a phone controller 111 (implemented by a mobile station modem (MSM) chip in the example of FIG. 2), a first display unit (or a liquid crystal display (LCD)) 112 for displaying information associated with overall function of the mobile communication terminal, a microphone 113 for receiving an audio signal, a keypad 114 for inputting a control command based on a user's manipulation into the MSM 111, a first speaker 115 for outputting an audio signal associated with the portable phone function, and a first memory 116 for storing the information associated with the overall function of the mobile communication terminal. Herein, the first speaker 115 serves as a receiver.

The DMB module 120 includes a DMB receiver 122 for receiving DMB data, a DMB controller 121 for processing the DMB data to output or provide the processed data to the user, a second LCD 123 for displaying image information outputted from the DMB controller 121, a second speaker 124 for outputting an audio signal outputted from the DMB controller 121, and a second memory 125 for storing information associated with the DMB service. Herein, the second speaker 124 is a device for outputting audio information included in multimedia information, and performs a stereo function. The second LCD 123 is a device for outputting image information included in the multimedia information. The second speaker 124 and the second LCD 123 configure an output interface for outputting digital broadcasting. The output interface can be composed of any one of the speaker and the LCD according to digital broadcasting type. For example, only the speaker can configure the output interface for digital audio broadcasting (DAB).

In the following description, it is assumed that the phone module 110 and the DMB module 120 are physically separated from each other. However, it is possible that the phone module 110 and the DMB module 120 may be totally or partially integrated onto a single chip. For example, a part for processing data received through a mobile communication network and a part for processing digital broadcasting data may be integrated onto a single chip. More specifically, a mobile communication function based on code division multiple access (CDMA) and a DMB function based on code division multiplexing (CDM) may be implemented on a single chip. Herein, it should be noted that a part for receiving and processing data through the mobile communication network corresponds to the phone module 110, and a part for receiving and processing DMB data correspond to the DMB module 120.

In addition, the first and second speakers 115 and 124 may be separated or integrated, as well as the first and second LCDs 112 and 123.

While the mobile communication terminal 100 of the present invention with the above-mentioned components outputs broadcasting data, the DMB module 120 may receive and output a short message service (SMS) message from the phone module 110 at the same time.

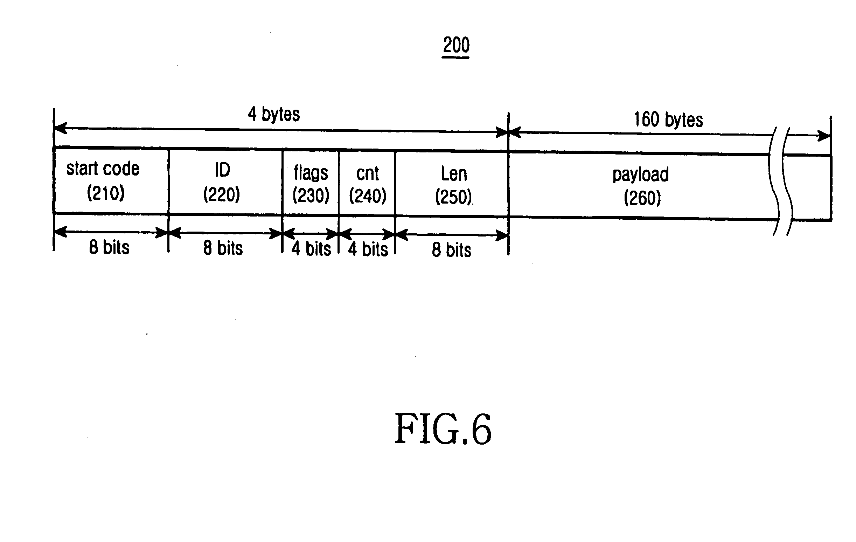

While the mobile communication terminal 100 receives broadcasting, the phone controller 111 controls the first memory 116 to store the SMS message received by the phone module 110, and converts the format of the SMS message to transfer the converted SMS message to the DMB module 120. For example, the phone controller 111 converts the received SMS message into a predetermined format of data with a fixed size (e.g., 164 bytes) to transfer the converted SMS message to the DMB module 120. An example of the format of the SMS message transferred between the phone module 110 and the DMB module 120 is illustrated in FIG. 6. Details of the SMS message format will be described with reference to FIG. 6.

After the second memory 125 stores the SMS message transferred by the phone controller 111, the DMB controller 121 controls the second LCD 123 to output the SMS message according to a preset output option. For example, the DMB controller 121 can perform a control operation such that the SMS message is popped up on the second LCD 123 in the form of an on screen display (OSD), or is displayed at a lower part of the screen on the second LCD 123 through a slide or scroll technique.

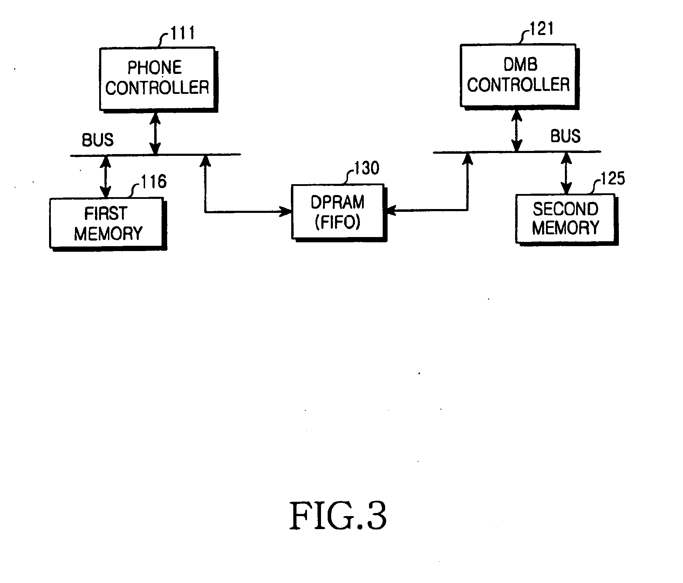

FIG. 3 is a block diagram illustrating an example of an interworking structure between internal modules in the mobile communication terminal in accordance with an embodiment of the present invention. More specifically, FIG. 3 illustrates the interworking structure between the first memory 116 included in the phone module 110 and the second memory 125 included in the DMB module 120. Referring to FIG. 3, the first and second memories 116 and 125 operate according to control operations of the phone controller 111 and the DMB controller 121, respectively. The first and second memories 116 and 125 are connected through buses to a dual port random access memory (DPRAM) 130 based on a first in first out (FIFO) structure to perform interworking. In this case, the interworking between respective devices within the phone module 110 and the DMB module 120 may be performed using various methods. Because FIG. 3 illustrates only one example for one of various methods, the present invention is not limited to the interworking structure illustrated in the example of FIG. 3.

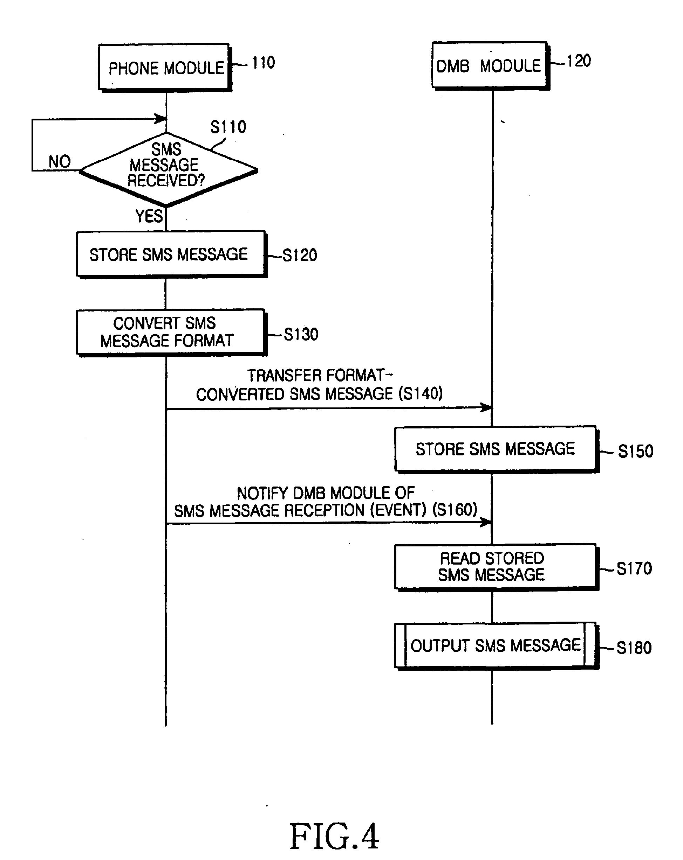

FIG. 4 is a ladder diagram illustrating a method for processing a text message in accordance with an embodiment of the present invention. More specifically, FIG. 4 illustrates a method for processing a received SMS message while the mobile communication terminal 100 operates in broadcasting mode.

Referring to FIGS. 2 and 4, when an SMS message is transferred to the mobile communication terminal 100, the phone module 110 of the mobile communication terminal 100 receives the transferred SMS message according to a preset SMS process routine. Once received (Step S110), the SMS message is stored in the first memory 116 (Step S120). The phone controller 111 then converts the SMS message into data that a user interface (UI) can recognize (e.g., text), and stores the data in its converted format. The phone controller 111 then converts the SMS message into a predetermined fixed size (e.g., 164 bytes) (Step S130) and transfers the finally converted SMS message to the DMB module 120 (Step S140). An example of the SMS message format transferred between the phone module 110 and the DMB module 120 is illustrated in FIG. 6. Then, the DMB module 120 stores the SMS message in the second memory 125 (Step S150).

The phone module 110 transfers the converted SMS message to the DMB module 120 and then notifies the DMB module 120 that the SMS message has been received (Step S160). To that end, the phone module 110 may generate a predetermined event and transfer the generated event to the DMB module 120.

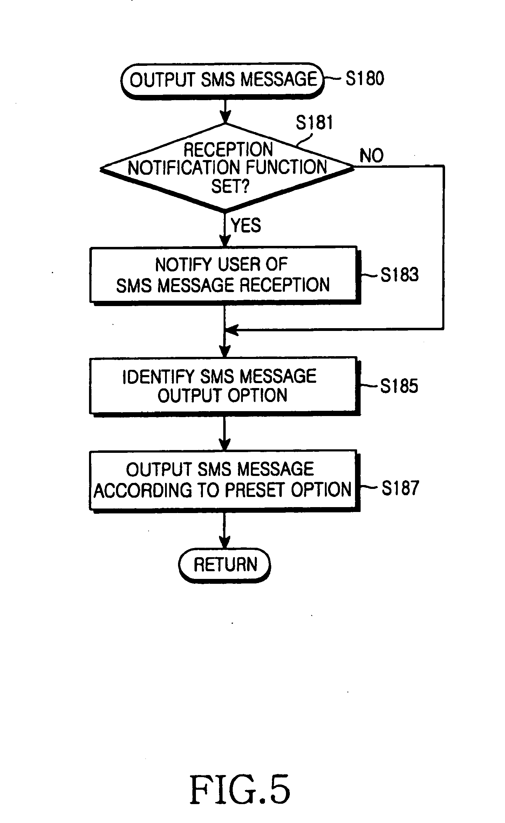

When the event is received, the DMB module 120 reads the stored SMS message (Step S170), and outputs the SMS message according to a preset output option (Step S180). An example of a process for outputting the SMS message is illustrated in FIG. 5.

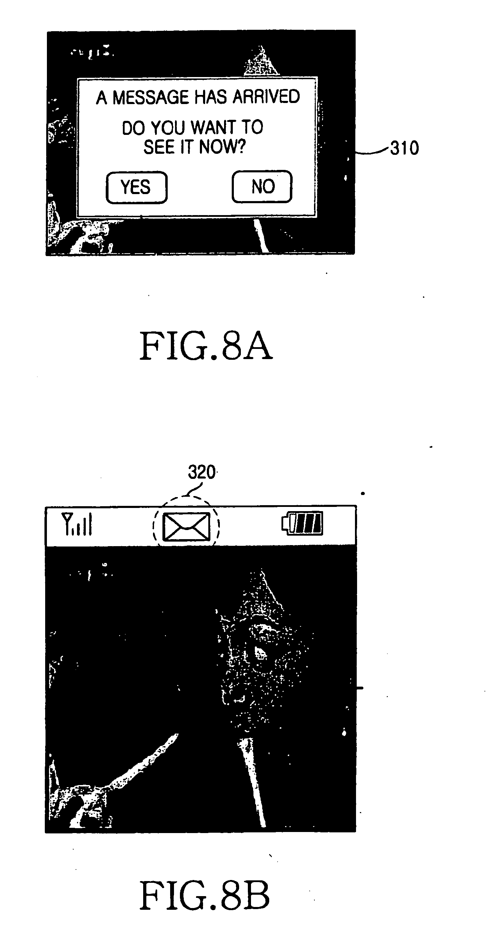

FIG. 5 is a flow chart illustrating the process for outputting the SMS message (Step S180) in accordance with an embodiment of the present invention. Referring to FIGS. 2 and 5, the DMB module 120 determines if a reception notification function has been set which indicates when an SMS message is received (Step S181). If the reception notification function has been set in step S181, the DMB controller 121 notifies the user that an SMS message has been received (Step S183). As illustrated in FIG. 8A, for example, a message window 310 displays a message indicating that an SMS message has been received and a question asking the user if he/she wants to see the SMS message, while allowing the user to select an answer. Preferably, the message window 310 is transparent so it does not obstruct the DMB image that the user is watching. A predetermined indicator (or icon) 320 is displayed on a partial area of the screen to notify the user of the SMS message reception as illustrated in FIG. 8B. In this case, it is preferred that the indicator 320 is connected to a key included in a keypad of the mobile communication terminal 100, so that the icon can be selected by pressing the key, invoking the function represented by the icon. As illustrated in FIG. 8B, for example, when the indicator 320 includes a symbol of a letter envelope, the keypad of the mobile communication terminal 100 has a key with a similar symbol that can be selected to view a corresponding SMS message.

After the SMS message reception notification process (Step S183), the DMB controller 121 identifies a preset SMS message output option (Step S185) and outputs the SMS message stored in the second memory 125 according to the preset SMS message output option (Step S187). For example, the SMS message may be output as a pop-up where it is displayed on the display in its entirety, it may slide across the display, or it may scroll down the display. The DMB controller 121 identifies which SMS message output option is selected, and outputs the SMS message according to the identified output option. In this case, the pop-up, slide, and scroll techniques are provided as examples and do not limit the SMS message output option. For example, as an alternative to the output options described above, the SMS message may be divided into lines, each having a predetermined length according to the width of the screen and, displayed line by line according to the user's key input.

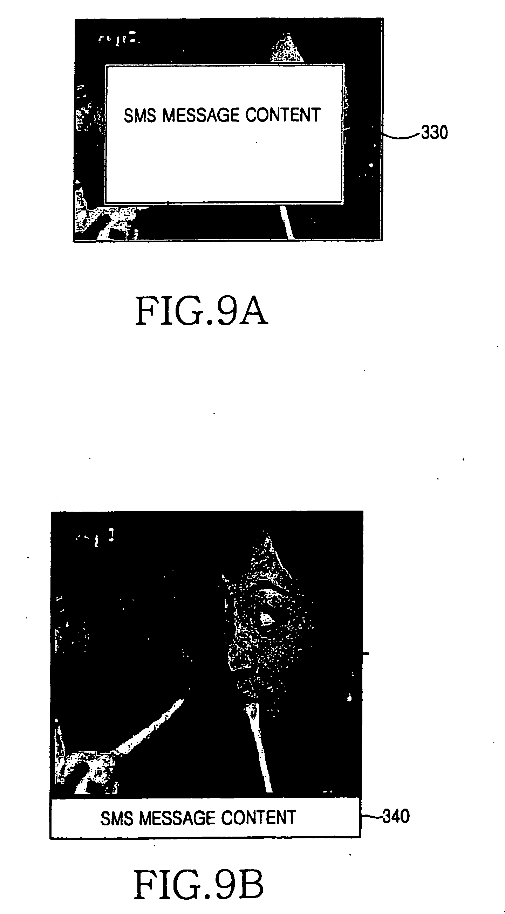

FIG. 9A illustrates an example of an SMS message window 330 popped up on the screen when the SMS message output option is the pop-up technique. FIG. 9B illustrates an example of the SMS message displayed on a predetermined area 340 at the lower part of the screen by the slide technique. As illustrated in FIG. 9A, when the SMS message output option is the pop-up technique, it is preferred that the SMS message window 330 is popped up in the center of the screen on which broadcasting data is being output. As illustrated in FIG. 9B, when the SMS message output option is the slide technique, it is preferred that the SMS message window 330 is displayed at the bottom of the screen on which broadcasting data is being output. And in case of the scroll technique, it is preferred that a window for displaying the SMS message opens at a specific area of the screen and content of the message is displayed while sequentially moving up or down in the message display window.

Preferably, the closing of the displayed SMS message window is automatically controlled by the DMB controller 121 or performed by a user request. For example, it is preferred that the SMS message window is displayed only for a predetermined display time period such that the message window is removed after the time period, or the SMS message window continues to be displayed until the user inputs a close command to remove the SMS message window.

FIG. 6 illustrates the data format of an SMS message 200 that is transmitted between internal modules of the mobile communication terminal in accordance with an embodiment of the present invention. Referring to FIGS. 2 and 6, the SMS message 200 120 has a fixed total length of 164 bytes including 4 bytes for a header field and 160 bytes for a payload field. More specifically, the header field includes a start code field 210, an identification (ID) field 220, a flag field 230, a count field 240, and a length field 250.

The start code field 210 is 8 bits long and stores a code that notifies the DMB controller 121 of the start position of a corresponding SMS message.

The ID field 220 is 8 bits long as well, and is used to multiplex and demultiplex different types of packets. For example, the ID field 220 stores information for identifying a sender of an SMS message when a number of SMS messages are received from different senders.

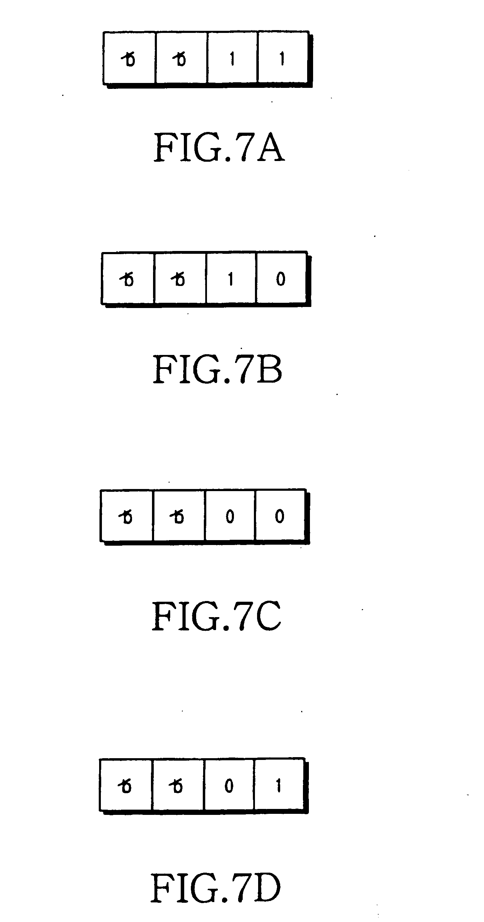

The flag field 230 is 4 bits long, and stores information indicating the connection relation between packets when the SMS message is configured by more than one packet. That is, when payload data of more than 160 bytes is to be transferred, the flag field 230 stores information for determining the order of data. For example, the third bit of 4 bits indicates that the corresponding packet is the first packet in the payload data, and the fourth bit represents that the corresponding packet is the last packet in the payload data of more than 160 bytes. The first bit (serving as the most significant bit (MSB)) and the second bit are reserved bits. Application examples of the flag field 230 are illustrated in FIGS. 7A to 7D.

FIG. 7A illustrates an example when both the third and fourth bits of the flag field are 1 indicating that the payload data in its corresponding packet is less than 160 bytes. That is, the application example of the flag field in FIG. 7A illustrates a case where the SMS message is configured by one packet.

FIG. 7B illustrates an example when the third and fourth bits of the flag field are 1 and 0, respectively. This indicates that payload data of more than 160 bytes is loaded and transferred, and the corresponding packet for the flag field is the first packet of the payload data.

FIG. 7C illustrates an example when both the third and fourth bits are 0 indicating that the payload data includes more than 160 bytes and that the corresponding packet is not the first or last packet. That is, the corresponding packet is an intermediate packet in the payload data with more than 160 bytes. When the corresponding packet is an intermediate packet in payload data of more than 160 bytes, the count field 240, described below, is used to determine the order of intermediate packets.

FIG. 7D illustrates an example when the third and fourth bits of the flag field are 0 and 1, respectively, to indicate that the payload data is more than 160 bytes and that the corresponding packet is the last packet.

The count field 240 is 4 bits long as well. The field 240 indicates a serial number of the payload data configured by a plurality of packets, and a different number is assigned according to each ID. This number is used, not only to determine order, but also as information of a packet that has been lost during transmission.

The length field 250 is 8 bits long, and indicates the length of a valid part of the payload. That is, the length field 250 indicates how long a valid, error-free payload data should be, the fixed length being 160 bytes.

In accordance with the present invention, an SMS message with the above-mentioned format is transferred from the phone module 110 to the DMB module 120, such that the SMS message can be provided to the user watching the DMB. More specifically, because the SMS message format has a fixed length, transmission effciency can be improved.

As is apparent from the above description, the present invention can display an SMS message through a DMB module when the SMS message is received through a phone module while a mobile communication terminal operates in broadcasting mode. Accordingly, a user of the mobile communication terminal for receiving digital broadcasting can conveniently use the digital broadcasting service.

Although the preferred embodiments of the present invention have been disclosed for illustrative purposes, those skilled in the art will appreciate that various modifications, additions and substitutions are possible, without departing from the scope of the present invention. Therefore, the present invention is not limited to the above-described embodiments, but is defined by the following claims.

## Claims

1. A method for displaying a text message for a mobile communication terminal capable of receiving digital multimedia broadcasting, the method comprising:
receiving a text message during broadcasting watching;
determining (S181) whether a reception notification technique stored in the memory for a text message is set;
displaying (S183) receipt of the text message on a part of a broadcasting screen according to the reception notification technique when the reception notification technique is set;
identifying (S185) an output setting for displaying the received text message; and
displaying (S187) content of the text message on the screen according to the output setting,
wherein the reception notification technique is one of displaying an indicator indicating the reception of the text message on a partial area of the screen on which the broadcasting data is being displayed and popping up a message window for displaying a message prompting the user to determine, whether to read the text message on a partial area of the screen on which the broadcasting data is being displayed.

2. The method according to claim 1, further comprising:
if the reception notification technique is a technique of displaying, on a part of the screen, an indicator for notifying receipt of the text message,
displaying (S187) content of the received text message, upon receipt of a request for displaying content of the received text message from a user, after displaying the indicator for notifying receipt of the text message on a part of the screen.

3. The method according to claim 1, further comprising:
if the reception notification technique is a technique of popping up, on a part of the screen, a message window for displaying a notification message used for determining whether to display the received message,
displaying (S187) content of the received text message after popping up the message on a part of the screen.

4. The method according to claim 1, wherein the displaying (S187) comprises:
displaying content of the text message on a partial area of the screen with a slide technique when the output setting is set to the slide technique.

5. The method according to claim 1, wherein the displaying (S187) comprises:
determining whether the output setting is at least one of a pop-up technique, a slide technique, and a scroll technique.

6. The method according to claim 5, wherein the displaying (S187) comprises:
popping up a message window including content of the text message on a partial area of the screen when the output setting is set to the pop-up technique.

7. The method according to claim 6, wherein the displaying (S187) comprises:
positioning a message window including content of the text message on a partial area of the screen, and then displaying content of the text message on the message window with a slide technique when the output setting is set to the slide technique.

8. The method according, to claim 6, wherein the displaying (S187) comprises:
positioning a message window for displaying content of the text message on a partial area of the screen, and then displaying content of the text message on the message with the scroll technique when the output setting is set to the scroll technique.

9. The method according to claim 1, wherein the displaying (S187) comprises:
overlappingly displaying, on the broadcasting screen, a message window for displaying content of the text message according to the output setting.

10. The method according to claim 9, further comprising:
determining whether there is a request for closing the message window displayed on the screen from a user while overlappingly displaying the message window on the screen; and
closing the message window displayed on the screen when there is a request for closing the message window displayed on the screen from the user.

11. The method according to claim 7, further comprising:
automatically closing the message window displayed on the screen after a lapse of time while overlappingly displaying the message window on the screen.

12. The method according to claim 1, further comprising:
identifying the output setting and overlappingly displaying content of the text message on the screen according to the output setting when the reception notification technique is not set.

## Patentansprüche

1. Verfahren zum Anzeigen einer Textnachricht für ein Mobilkommunikations-Endgerät, das in der Lage ist, digitale Multimedia-Übertragungen zu empfangen, wobei das Verfahren umfasst:
Empfangen einer Textnachricht, während eine Übertragung verfolgt wird;
Feststellen (S181), ob eine in dem Speicher für eine Textnachricht gespeicherte Empfangsmitteilungsmethode eingestellt ist;
Anzeigen (S183) des Empfangs derTextnachricht auf einem Teil eines Übertragungs-Bildschirms entsprechend der Empfangsmitteilungsmethode, wenn die Empfangsmitteilungsmethode eingestellt ist;
Identifizieren (S185) einer Ausgabeeinstellung zum Anzeigen der empfangenen Textnachricht; und
Anzeigen (S187) von Inhalt der Textnachricht auf dem Bildschirm entsprechend der Ausgabeeinstellung,
wobei die Empfangsmitteilungsmethode Anzeigen eines Indikators, der den Empfang der Textnachricht anzeigt, auf einem Teilbereich des Bildschirms, auf dem die Übertragungsdaten angezeigt werden, oder Aufklappen eines Nachrichtenfensters zum Anzeigen einer Nachricht, die den Benutzer auffordert, zu bestimmen, ob die Textnachricht gelesen werden soll, auf einem Teilbereich des Bildschirms, auf dem die Übertragungsdaten angezeigt werden, ist.

2. Verfahren nach Anspruch 1, das des Weiteren umfasst:
wenn die Empfangsmitteilungsmethode eine Methode ist, bei der auf einem Teil des Bildschirms ein Indikator zum Mitteilen von Empfang der Textnachricht angezeigt wird,
Anzeigen (S187) von Inhalt der empfangenen Textnachricht bei Empfang einer Anforderung zum Anzeigen von Inhalt der empfangenen Textnachricht von einem Benutzer nach Anzeigen des Indikators zum Mitteilen von Empfang der Textnachricht auf einem Teil des Bildschirms.

3. Verfahren nach Anspruch 1, das des Weiteren umfasst:
wenn die Empfangsmitteilungsmethode eine Methode ist, bei der auf einem Teil des Bildschirms ein Nachrichtenfenster zum Anzeigen einer Mitteilungsnachricht aufgeklappt wird, die dazu dient, zu bestimmen, ob die empfangene Nachricht angezeigt werden soll,
Anzeigen (S187) von Inhalt der empfangenen Textnachricht nach Aufklappen der Nachricht auf einem Teil des Bildschirms.

4. Verfahren nach Anspruch 1, wobei das Anzeigen (S187) umfasst:
Anzeigen von Inhalt der Textnachricht auf einem Teilbereich des Bildschirms mit einer Gleitmethode, wenn die Ausgabeeinstellung auf die Gleitmethode eingestellt ist.

5. Verfahren nach Anspruch 1, wobei das Anzeigen (S187) umfasst:
Feststellen, ob die Ausgabeeinstellung wenigstens eine Aufklappmethode (pop-up technique), eine Gleitmethode (slide technique) oder eine Scroll-Methode (scroll technique) ist.

6. Verfahren nach Anspruch 5, wobei das Anzeigen (S187) umfasst:
Aufklappen eines Nachrichtenfensters, das Inhalt der Textnachricht enthält, auf einem Teilbereich des Bildschirms, wenn die Ausgabeeinstellung auf die Aufklappmethode eingestellt ist.

7. Verfahren nach Anspruch 6, wobei das Anzeigen (S187) umfasst:
Positionieren eines Nachrichtenfensters, das Inhalt der Textnachricht enthält, auf einem Teilbereich des Bildschirms und anschließend Anzeigen der Textnachricht in dem Nachrichtenfenster mit einer Gleitmethode, wenn die Ausgabeeinstellung auf die Gleitmethode eingestellt ist.

8. Verfahren nach Anspruch 6, wobei das Anzeigen (S187) umfasst:
Positionieren eines Nachrichtenfensters zum Anzeigen von Inhalt der Textnachricht auf einem Teilbereich des Bildschirms und anschließend Anzeigen von Inhalt der Textnachricht in dem Nachrichtenfenster mit der Scroll-Methode, wenn die Ausgabeeinstellung auf die Scroll-Methode eingestellt ist.

9. Verfahren nach Anspruch 1, wobei das Anzeigen (S187) umfasst:
überlappendes Anzeigen eines Nachrichtenfensters zum Anzeigen von Inhalt der Textnachricht entsprechend der Ausgabeeinstellung auf dem Übertragungs-Bildschirm.

10. Verfahren nach Anspruch 9, das des Weiteren umfasst:
Feststellen, ob eine Anforderung zum Schließen des auf dem Bildschirm angezeigten Nachrichtenfensters von einem Benutzer vorhanden ist, während das Nachrichtenfenster überlappend auf dem Bildschirm angezeigt wird; und
Schließen des auf dem Bildschirm angezeigten Nachrichtenfensters, wenn eine Anforderung zum Schließen des auf dem Bildschirm angezeigten Nachrichtenfensters von dem Benutzer vorhanden ist.

11. Verfahren nach Anspruch 7, das des Weiteren umfasst:
automatisches Schließen des auf dem Bildschirm angezeigten Nachrichtenfensters nach Ablauf einer Zeit, während das Nachrichtenfenster überlappend auf dem Bildschirm angezeigt wird.

12. Verfahren nach Anspruch 1, das des Weiteren umfasst:
Identifizieren der Ausgabeeinstellung und überlappendes Anzeigen von Inhalt der Textnachricht auf dem Bildschirm entsprechend der Ausgabeeinstellung, wenn die Empfangsmitteilungsmethode nicht eingestellt ist.

## Revendications

1. Procédé pour afficher un message de texte pour un terminal de communication mobile capable de recevoir une radiodiffusion multimédia numérique, le procédé comprenant :
la réception d'un message de texte pendant une surveillance de radiodiffusion ;
le fait de déterminer (S181) si une technique de notification de réception stockée dans la mémoire pour un message de texte est établie ;
l'affichage (S183) de la réception du message de texte sur une partie d'un écran de radiodiffusion conformément à la technique de notification de réception lorsque la technique de notification de réception est établie ;
l'identification (S185) d'un paramètre de sortie pour l'affichage du message de texte reçu ; et
l'affichage (S187) du contenu du message de texte sur l'écran conformément au paramètre de sortie,
dans lequel la technique de notification de réception est l'une d'un affichage d'un indicateur indiquant la réception du message de texte sur une zone partielle de l'écran sur lequel les données de radiodiffusion sont en cours d'affichage et de l'apparition brusque d'une fenêtre de message pour afficher un message invitant l'utilisateur à déterminer s'il faut lire le message de texte sur une zone partielle de l'écran sur lequel les données de radiodiffusion sont en cours d'affichage.

2. Procédé selon la revendication 1, comprenant en outre :
si la technique de notification de réception est une technique d'affichage, sur une partie de l'écran, un indicateur pour notifier la réception du message de texte,
l'affichage (S187) du contenu du message de texte reçu, à la réception d'une demande d'un utilisateur d'afficher le contenu du message de texte reçu, après l'affichage de l'indicateur pour notifier la réception du message de texte sur une partie de l'écran.

3. Procédé selon la revendication 1, comprenant en outre :
si la technique de notification de réception est une technique d'apparition brusque, sur une partie de l'écran, d'une fenêtre de message pour l'affichage d'un message de notification utilisé pour déterminer si le message reçu doit être affiché,
l'affichage (S187) du contenu du message de texte reçu après l'apparition brusque du message sur une partie de l'écran.

4. Procédé selon la revendication 1, dans lequel l'affichage (S187) comprend :
l'affichage du contenu du message de texte sur une zone partielle de l'écran avec une technique de coulisse lorsque le réglage de sortie est établi sur la technique de coulisse.

5. Procédé selon la revendication 1, dans lequel l'affichage (S187) comprend :
le fait de déterminer si le paramètre de sortie est au moins l'une d'une technique d'apparition brusque, d'une technique de coulisse et d'une technique de défilement.

6. Procédé selon la revendication 5, dans lequel l'affichage (S187) comprend :
l'apparition brusque d'une fenêtre de message comprenant le contenu du message de texte sur une zone partielle de l'écran lorsque le paramètre de sortie est établi sur la technique d'apparition brusque.

7. Procédé selon la revendication 6, dans lequel l'affichage (S187) comprend :
le positionnement d'une fenêtre de message comprenant le contenu du message de texte sur une zone partielle de l'écran, puis l'affichage du contenu du message de texte sur la fenêtre de message avec une technique de coulissement lorsque le paramètre de sortie est établi sur la technique de coulissement.

8. Procédé selon la revendication 6, dans lequel l'affichage (S187) comprend :
le positionnement d'une fenêtre de message pour l'affichage du contenu du message de texte sur une zone partielle de l'écran, puis l'affichage du contenu du message de texte sur le message avec la technique de défilement lorsque le paramètre de sortie est établi sur la technique de défilement.

9. Procédé selon la revendication 1, dans lequel l'affichage (S187) comprend :
l'affichage en superposition, sur l'écran de radiodiffusion, d'une fenêtre de message pour afficher le contenu du message de texte conformément au paramètre de sortie.

10. Procédé selon la revendication 9, comprenant en outre :
le fait de déterminer s'il y a une demande, provenant d'un utilisateur, de fermer la fenêtre de message affichée sur l'écran pendant l'affichage en superposition de la fenêtre de message sur l'écran ; et
la fermeture de la fenêtre de message affichée sur l'écran lorsqu'il y a une demande provenant de l'utilisateur de fermer la fenêtre de message affichée sur l'écran.

11. Procédé selon la revendication 7, comprenant en outre :
la fermeture automatique de la fenêtre de message affichée sur l'écran après un laps de temps tout en affichant en superposition la fenêtre de message sur l'écran.

12. Procédé selon la revendication 1, comprenant en outre :
l'identification du paramètre de sortie et l'affichage en superposition du contenu du message de texte sur l'écran conformément au paramètre de sortie lorsque la technique de notification de réception n'est pas établie.
